# EUROPEAN PATENT APPLICATION

(11) **EP 2 099 183 A1**
(43) Date of publication of application: **09.09.2009**
(21) Application number: 06828226.8
(22) Date of filing: 04.12.2006
(51) Int. Cl.: H04L 25/00

(54) **A WIRELESS COMMUNICATION APPARATUS AND THE CONFIGURATION METHOD THEREOF**

(71) Applicant: ZTE Corporation, Shenzhen, Guangdong 518057 (CN)
(72) Inventor: CAI, Sean, Guangdong 518057 (CN); QU, Hongyun, Guangdong 518057 (CN)
(74) Representative: Thinat, Michel
(86) International application number: PCT/CN2006/003260
(87) International publication number: WO 2008/067685

(57) **Abstract**

A wireless communication apparatus and the configuration method thereof are provided. The wireless communication apparatus includes: a baseband module for processing the baseband signal, which is located in a host device of the wireless communication apparatus; and a radio frequency (RF) module for receiving the RF signal according to the RF band and the spectrum mask and conducting signal transmission with the baseband module, which is replaceably connected to the host device. By detaching the RF module from the host device and providing the interface between the RF module and the baseband module of the host device, the wireless communication apparatus can realize the wireless access by selecting the replaceable RF module according to the use requirement, and the application flexibility of the communication terminal is enhanced and the weight and bulk of the host device is reduced.

## Description

### Filed of the Invention

The present invention relates to a wireless communication system, particularly to a wireless communication apparatus and the configuration method thereof.

### Background of the Invention

In a wireless communication system, the wireless communication apparatus, in cell coverage, communicates through electromagnetic wave. The spectrum range or the spectrum bandwidth assigned to the wireless communication apparatus is divided into various carrier frequencies, so as to generate communication channels with different frequency characteristics.

A wireless standard technology, for the purpose of global wireless roaming, encounters the greatest challenge which is normally to require for a unified frequency band and similar spectrum mask for all nations. However, there are different frequency band requirements and different radio frequency regulations in different contraries. Occasionally, even if the same frequency band is available for different contraries, the requirements on the spectrum mask may be different. As a result, the above challenges generally can not be overcome, therefore one communication apparatus which is usable in one contrary might be unusable in another contrary due to the different requirement on radio frequency (RF) band or spectrum mask in that contrary.

For the wireless standard capable of supporting different frequency bands, in a wireless apparatus based on that wireless standard, although the design of the baseband portion may be the same, only one type of the RF front-end design can not meet all requirements on frequency band and spectrum mask.

At present, this problem is addressed by using a terminal supporting dual, triple, and even quadruple frequency band, such as GSM cell phone with triple frequency band. But such solution is not ideal since it commonly increases the size, cost and power consumption of the terminal.

Consequently, there is need for a design solution for a wireless communication apparatus which is used to satisfy the application requirements of multiple frequency bands and multiple spectrum mask.

### Summary of the Invention

The main purpose of the present invention is to provide a wireless communication apparatus and the configuration method thereof, used for allowing the wireless communication apparatus to be able to support multiple frequency bands and multiple spectrum mask with smaller bulk and power consumption.

To achieve the above object, according to one aspect of the present invention, provides a wireless communication apparatus which comprises a baseband module used for processing baseband signal and located in the host device of the wireless communication apparatus; and a radio frequency (RF) module used for receiving RF signal according to RF band and spectrum mask and conducting signal transmission with the baseband module, and is replaceably connected to the host device.

Preferably, the interface between the RF module and the baseband module is dedicated interface or standardized interface.

Preferably, there are at least one said RF module which is used for supporting at least one RF band and spectrum mask. Preferably, there are at least one said baseband module which is used for supporting at least one wireless technology.

Preferably, the signal transmitted between the RF module and the baseband module includes but not limited to: baseband signal in the receiving channel, baseband signal in the transmitting channel, RF digital control signal, analog measurement and control signal and power supply signal.

In order to achieve the above object, according to another aspect of the present invention, provides a configuration method of wireless communication apparatus. The configuration method includes the following steps:
providing a baseband module in the host device of the wireless communication apparatus, wherein the baseband module is used for processing baseband signal;
providing a RF module such that the RF module is replaceably connected to the host device, wherein the RF module is used for receiving RF signal according to RF band and spectrum mask;
transmitting signal between the RF module and the baseband module.

Optionally, providing a dedicated interface or standardized interface between the RF module and the baseband module.

Preferably, the step of providing the RF module includes providing at least one said RF module for supporting at least one RF band and the spectrum mask. Preferably, the step of providing the baseband module includes: providing at least one said baseband module for supporting at least one wireless technology.

Preferably, during the step of transmitting signal, the signal transmitted between the RF module and the baseband module includes: baseband signal in a receiving channel, baseband signal in a transmitting channel, RF digital control signal, analog measurement and control signal and power supply signal.

With at least one of the above solution, according to the present invention, the RF module is separated from the host device and an interface is provided between the baseband module in the host device and the RF module, such that the RF module can be detached from the wireless communication apparatus depending on the application requirement so as to achieve wireless access, therefore improving the application flexibility of the communication apparatus and reducing the weight and bulk of the host device.

### Brief Description of the Drawings

The drawings described herein are provided for further understanding the present invention, constitute a part of the present application. The exemplary embodiments of the present invention and the explanation thereof are given by way of illustration only, and thus are not limitative of the present invention, and wherein:
Fig.1 is a block diagram of the wireless communication apparatus according to the present invention;
Fig.2 is a flowchart of the configuration method of the wireless communication apparatus according to the present invention;
Fig.3 is a schematic view of a conventional wireless communication apparatus;
Fig.4 is a schematic view of the wireless communication apparatus according to the embodiment of the present invention;
Fig.5 is a schematic view of signal communication of the wireless communication apparatus according to the embodiment of the present invention; and
Fig.6 is a schematic view of the connector of the wireless communication apparatus according to the embodiment of the present invention.

### Detailed Description

The present invention will be detailed hereinafter in connection with the embodiments of the present invention and reference will be made to the drawings. If not conflict, the embodiments and the technical features thereof can be combined each other.

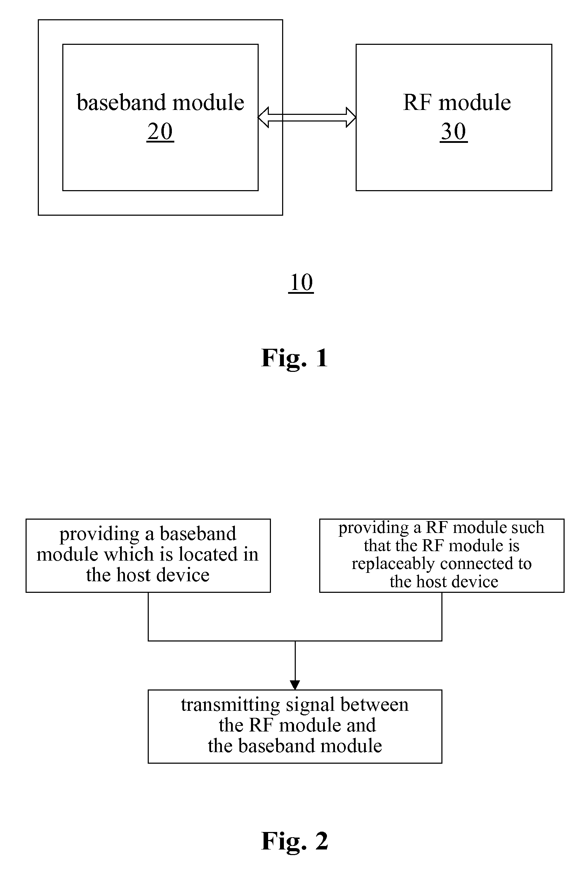

Referring to Fig 1, the wireless communication apparatus 10 according the embodiment of the present invention comprises a baseband module 20 used for processing the baseband signal and located in the host device of the wireless communication apparatus 10; and a radio frequency (RF) module 30 used for receiving RF signal according to RF band and spectrum mask (one frequency band corresponding to plural spectrum mask and each pair of frequency band and spectrum mask corresponding to one RF module 30) and communicating signal with the baseband module 20. The RF module 30 is replaceably connected to the host device.

The interface between the RF module 30 and the baseband module 20 may be dedicated interface or standardized interface.

Preferably, the wireless communication apparatus 10 comprises at least one RF module 30 which is used for supporting at least one RF band and spectrum mask. Optionally, the wireless communication apparatus comprises at least one baseband module 20 which is used for supporting at least one wireless technology.

The signal transmitted between the RF module 30 and the baseband module 20 can include, but are not limited to, baseband signal in the receiving channel, baseband signal in the transmitting channel, RF digital control signal, analog measurement and control signal and power supply signal.

Referring to Fig 2, the configuration method of the wireless communication apparatus according to the embodiment of the present invention includes the following steps:
providing the baseband module in the host device of the wireless communication apparatus and wherein, the baseband module is used for processing the baseband signal;
providing the RF module such that the RF module is replaceably connected to the host device and wherein, the RF module is used for receiving RF signal according to the RF band and the spectrum mask;
transmitting signal between the RF module and the baseband module.

Optionally, a dedicated interface or standardized interface is provided between the RF module and the baseband module.

The step of providing the RF module includes providing at least one RF module for supporting at least one RF band and the spectrum mask. The step of providing the baseband module includes providing at least one baseband module for supporting at least one wireless technology.

The step of transmitting signal includes, but not limited thereto, transmitting between the RF module and the baseband module, the following signals: the baseband signal in the receiving channel, the baseband signal in the transmitting channel, the RF digital control signal, the analog measurement and control signal, and the power supply signal.

The present invention relates to a method for separating the RF module and the baseband module of a wireless communication apparatus. The present invention proposes a design in which the RF module is separated from the host device of the wireless communication apparatus such that the host device can include the baseband portion merely and the separated RF module can easily be connected to the host device. Herein, the host device of the wireless communication apparatus may be cell phone, notebook computer, PDA and etc. In this way, the separated RF module may be achieved by various device manufacturers. The interface between the separated RF module and the baseband portion of the host device may be private, or may be production standardized, or globally unified. In the embodiment of the present invention, the separated RF module at least includes a whole design of transceiver, comprising up-frequency conversion and down-frequency conversion between the baseband signal and the RF signal. A baseband signal processing unit (i.e., baseband modem) is located in the hose device, such as in portable notebook computer or PDA.

The host device can include one or more baseband signal processing units (i.e., baseband modem), which are respectively used for processing different wireless technologies. Besides, the host device can operate together with different RF modules by setting relevant configurations, so as to achieve different wireless access technologies.

The design method of enhanced RF front end (the RF front end includes RF module and antenna) proposed by the present invention, which supports the requirement of multiple frequency band and multiple spectrum mask, comprises:
1) the RF module can be separated from the host device and can be replaced by a user depending on the application requirement of various regions, which is similar to that an insertable device USB used on a notebook computer;
2) the RF module is separated from the digital unit such that the user can select a dedicated RF front end depending on the application requirement of various regions;
3) the interface between the separable RF front end and the baseband portion is standardization-based interface, such that the RF unit and baseband unit can be achieved from different device manufacturers.

In the first embodiment of the present invention, as a part of the whole wireless communication apparatus, RF transceiver adapter is composed of a RF circuit enclosed in a separably module. Herein, the wireless communication apparatus may be intelligent phone, portable computer with built-in wireless access, wireless PDA and etc.

The hose device such as a portable computer or PDA can include one or more baseband signal processing unit (i.e., modem) which can be respectively used for processing different wireless technologies. Besides, the host device can operate together with different RF modules by setting relevant configurations, so as to achieve different wireless access technologies.

For example, in the spectrum and band speculated by WiMAX Forum, there are totally 5 RF band sets which are respectively corresponding to different system frequency bands and channel bandwidth, which is described as follows.
Band Class 1 2.3-2.4 GHz 8.75 MHz BCG 1A
Band Class 1 2.3-2.4 GHz 5/10 MHz BCG 1B
Band Class 2 2.305-2.320, 2.345-2.360 GHz 3.5 MHz BCG 2A
Band Class 2 2.305-2.320, 2.345-2.360 GHz 5 MHz BCG 2B
Band Class 2 2.305-2.320, 2.345-2.360 GHz 10 MHz BCG 2C
Band Class 3 2.496-2.69 GHz 5/10 MHz BCG 3A
Band Class 4 3.3-3.4 GHz 5 MHz BCG 4A
Band Class 4 3.3-3.4 GHz 7 MHz BCG 4B
Band Class 4 3.3-3.4 GHz 10 MHz BCG 4C
Band Class 5 3.4-3.8 GHz 5 MHz BCG 5A
Band Class 5 3.4-3.6 GHz 5 MHz BCG 5AL
Band Class 5 3.6-3.8 GHz 5 MHz BCG 5AH
Band Class 5 3.4-3.8 GHz 7 MHz BCG 5B
Band Class 5 3.4-3.6 GHz 7 MHz BCG 5BL
Band Class 5 3.6-3.8 GHz 7 MHz BCG 5BH
Band Class 5 3.4-3.8 GHz 10 MHz BCG 5C
Band Class 5 3.4-3.6 GHz 10 MHz BCG 5CL
Band Class 5 3.6-3.8 GHz 10 MHz BCG 5CH

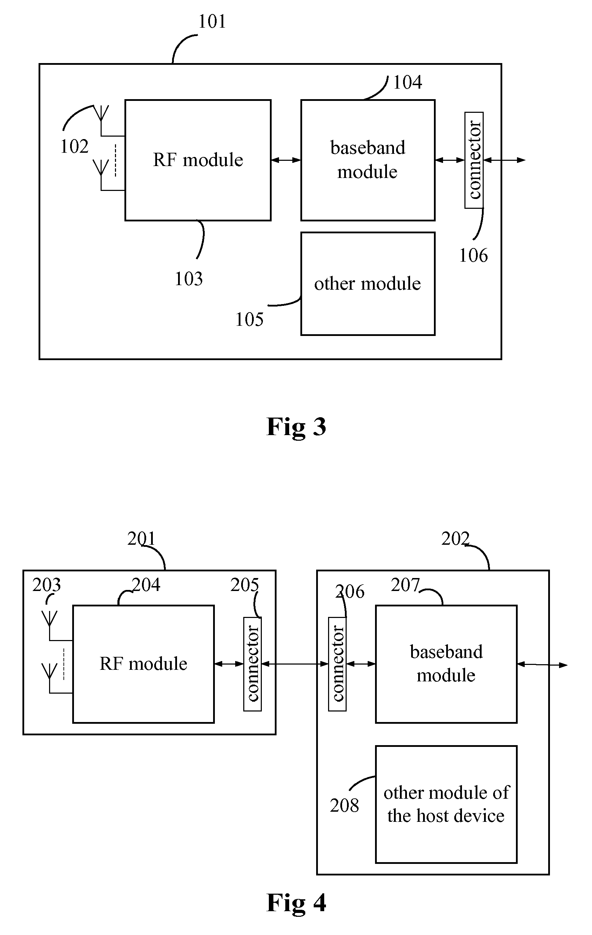

In the wireless communication apparatus 101 shown in Fig 3, the RF module 103 and the baseband module 104 are both integrated into single wireless communication apparatus 101. The antenna 102 is connected to the RF module 103 for transmitting and receiving signal. The baseband module 104 is connected with a connector 106 and is connected to outside through a standard interface. The wireless communication apparatus 101 also includes other functional module 105 used for obtaining other functions besides those of the RF module 103 and the baseband module 104.

Most WiMAX devices are similar to the wireless communication apparatus shown in Fig 3, that is, one device includes RF module and baseband module therein. In this way, a device which is designed for one frequency band and channel bandwidth commonly can not work appropriately with other frequency band and channel bandwidth. The major reasons are: the different frequency bands from 2.3GHz to 3.8GHz; the different channel bandwidth including 5MHz, 7MHz, 8.75MHz and 10MHz; and the different spectrum masks which are required by different spectrum regulations. Due to these different RF requirements mentioned-above, it is almost impossible to design one WiMAX device which is able to operate in different contraries or under different RF requirements.

The present invention proposes a design method capable of solving the problem mentioned above. As shown in Fig 4, the RF module is separated from the host device and thus replaceable, so as to meet different frequency band requirements. The RF portion 201 comprising the RF module 204 is separated out from the host device 202. As for the baseband portion 207, the chip comprising the modem is held in the host device 202. The RF portion 201 can be assembled and connected with the host device 202 by the connector 205. The host device 202 and the slave unit 201 comprising the RF module 204 can provide necessary support for reliable connection between the both sides through the connector.

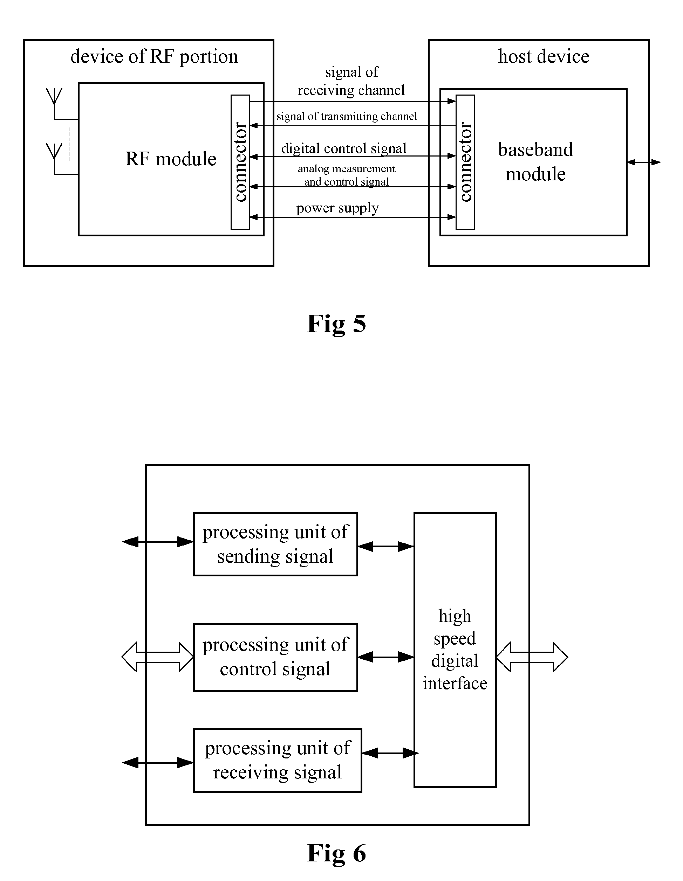

The second embodiment of the present invention is shown in Fig 5. The communication between the separated RF module and the baseband module of the host device is performed through the connector. The signal passing through the connector may include, but not limited thereto, baseband signal in the receiving channel, baseband signal in the transmitting channel, RF digital control signal, analog measurement and control signal, and power supply signal. The interface between the RF module and the baseband module may be standardized.

Fig 6 shows the connector between the separated RF module and the baseband module of the host device. The connector is connected to the RF module and the baseband module respectively, providing for the interface for connecting the RF device and the host device.

The connector mainly comprises a processing unit of sending signal, a processing unit of receiving signal, a processing unit of control signal and a high speed digital interface. The processing unit of sending signal, the processing unit of receiving signal and the processing unit of control signal are connected to the high speed digital interface respectively, primarily functioning as the conversion of the sending signal, the receiving signal and the control signal, and so on, for example, the conversion of signal protocol etc., so as to convert various signals to standard interface signal. The converted interface signal is transmitted to corresponding connector through the high speed digital interface. Via the processing unit of sending signal, the host device comprising the baseband module sends baseband information to the RF device. Via the processing unit of receiving signal, the host device comprising the baseband module receives the baseband information from the RF device. The host device and the RF device transmit control information via the processing unit of control signal, wherein the control information can include RF digital control information, analog measurement and control information, clock synchronization information and so on.

The descriptions above are only preferable embodiments of the present invention, which are not used to restrict the present invention. For those skilled in the art, various changes and variations can be made to the present invention. Within the spirit and principle of the present invention, any amendments, equivalent substitutions, improvements etc are all covered by the scope of protection of the present invention.

## Claims

1. A wireless communication apparatus, **characterized in that** the wireless communication apparatus comprises:
a baseband module used for processing baseband signal and located in the host device of the wireless communication apparatus;
a radio frequency (RF) module used for receiving RF signal according to RF band and spectrum mask and conducting signal transmission with the baseband module, and is replaceably connected to the host device.

2. The wireless communication apparatus according to Claim 1, **characterized in that** the interface between the RF module and the baseband module is dedicated interface or standardized interface.

3. The wireless communication apparatus according to Claim 1, **characterized in that** there are at least one said RF module which is used for supporting at least one RF band and spectrum mask.

4. The wireless communication apparatus according to Claim 1, **characterized in that** there are at least one said baseband module which is used for supporting at least one wireless technology.

5. The wireless communication apparatus according to Claim 1, **characterized in that** the signal transmitted between the RF module and the baseband module includes: baseband signal in the receiving channel, baseband signal in the transmitting channel, RF digital control signal, analog measurement and control signal and power supply signal.

6. A configuration method of a wireless communication apparatus, **characterized in that** the method comprises.
providing a baseband module in the host device of the wireless communication apparatus, wherein the baseband module is used for processing baseband signal;
providing a RF module such that the RF module is replaceably connected to the host device, wherein the RF module is used for receiving RF signal according to RF band and spectrum mask;
transmitting signal between the RF module and the baseband module.

7. The configuration method according to Claim 6, **characterized in that** further comprises:
providing a dedicated interface or standardized interface between the RF module and the baseband module.

8. The configuration method according to Claim 6, **characterized in that** the step of providing the RF module includes: providing at least one said RF module for supporting at least one RF band and the spectrum mask.

9. The configuration method according to Claim 6, **characterized in that** the step of providing the baseband module includes: providing at least one said baseband module for supporting at least one wireless technology.

10. The configuration method according to Claim 6, **characterized in that** during the step of transmitting signal, the signal transmitted between the RF module and the baseband module includes: baseband signal in a receiving channel, baseband signal in a transmitting channel, RF digital control signal, analog measurement and control signal and power supply signal.
